# EUROPEAN PATENT APPLICATION

(11) **EP 1 816 550 A1**
(43) Date of publication of application: **08.08.2007**
(21) Application number: 06002498.1
(22) Date of filing: 07.02.2006
(51) Int. Cl.: G06F 3/033

(54) **Portable equipment with improved link display**

(71) Applicant: Sony Ericsson Mobile Communications AB, 221 88 Lund (SE)
(72) Inventor: Olsson, Stefan, 224 64 Lund (SE); Andersson, Jonas, 226 48 Lund (SE)
(74) Representative: Körber, Martin Hans

(57) **Abstract**

The present invention relates to a portable equipment (1) for receiving data, comprising a storing portion (5) for storing the received data file, said storing portion (5) having a size which enables the processing portion (6) to process the stored data file to detect information patterns in the stored data file, and a display (2) for displaying data, whereby said display (2) is adapted to display a detected information pattern with a readable size together with said stored data file.

## Description

### TECHNICAL FIELD OF THE INVENTION

The present invention relates to a portable equipment enabling the readable display of links and similar information in a displayed image.

### DESCRIPTION OF RELATED ART

The display of telephone numbers, e-mail addresses, website addresses, such as HTTP addresses on the display of television sets, personal computers and similar devices is well known. More and more devices highlight such kind of link information in a certain way, e.g. by underlining and providing a functionality in which a user can click on or select the highlighted link information in order to establish a communication (e.g. mobile phone and the like) or retrieve information (e.g. website or the like). In small portable devices, the size of the display is usually quite small and the displayed information is either compressed and/or reduced in resolution. This, on the other hand makes it difficult for a user to recognise and to read information, such as link information described above, in a displayed image.

Additionally, more and more future portable equipments will enable the reception and the display of television programmes or the like with moving or still images on a small display. These images will contain link information as described above or other kind of information which needs to be readable for a user on the display. It has to be noted that in the following description the term "information pattern" will be used to describe and cover all kind of different information types which may be embedded or part of a displayed image on a display of a small portable equipment, including but not limited to link information, such as telephone numbers, Internet addresses, e-mail addresses and so forth, as well as any kind of readable or recognisable information comprising characters, numbers, symbols and any combination thereof. As stated above, in portable equipments the display is usually quite small so that it is difficult for a user to read and recognise such information patterns in a displayed image. Normally, in current portable equipments, a received television picture or any other kind of received image data need to be downscaled before it is written and stored in the video memory of the portable equipment. The video memory of such equipments has a size which corresponds to the size of the display of the portable equipment. E.g., even if the digitised PAL television signal can contain enough information to create a picture with a resolution of 640x512 pixels, a portable equipment cannot display such a resolution on its display having a small resolution, such as 128x128 pixels. The problem with the downscaling of the received image signals is the information loss which results in the fact that embedded or contained information patterns which need to be recognised or read by a user cannot be seen or recognised when displayed on the display. Additionally, in case that the information pattern comprised or embedded in a received image needs to be highlighted, the received image file needs to be processed by an information pattern recognition software, such as OCR, so that the recognised information pattern can be highlighted on the display of the portable equipment. However, after the downscaling step of a received image file, the information pattern recognising software might not be able to recognise the relevant information any more due to the information loss after the downscaling process.

### SUMMARY

The object of the present invention is therefore to provide a portable equipment for receiving data which enables the detection of information patterns in a received data file and the display of the data file and the detected information patterns in a simple but effective manner.

The above object is achieved by a portable equipment for receiving data according to claim 1. The portable equipment according to the present invention comprises a storing portion for storing a received data file, said storing portion having a size which enables a processing portion to process the stored data file to detect information patterns in the stored data file and a display for displaying data, whereby said display is adapted to display a detected information pattern with a readable size together with said stored data file.

It should be emphasised that the term "comprises/comprising" when used in this specification is taken to specify the presence of stated features, integers, steps or components but does not preclude the presence or addition of one or more other features, integers, steps, components or groups thereof.

The term "portable equipment" includes portable radio communication equipment. The term "portable radio communication equipment" includes mobile radio terminal and all further equipment, such as mobile telephones, pagers, communicators, i.e. electronic organisers, smartphones or the like. It has to be noted that the wireless system in which the portable equipment according to the present invention is adapted to receive data can be any kind of wireless system such as a wireless cellular telecommunication system, a wireless broadcasting system, a wireless paging system and so forth. The term "data file" comprises any kind of data which can be wirelessly transmitted and received and displayed on the display of the portable equipment, e.g. still image data, moving image data, streaming data, text data and so forth.

Advantageously, the processing portion is adapted to cause the display to display a detected information pattern with an enlarged size as compared to the remaining data file. In case that the detected information pattern would be too small in size when displayed on the display, it is enlarged so that a user may be able to read and recognise the information pattern within the displayed data file.

Further advantageously, the portable equipment of the present invention comprises a communication portion for transmitting at least a part of said stored data file in a wireless communication system to a remote processing device and for receiving a detected information pattern from said processing device. Since the software necessary to detect information patterns may be very large in size so that the internal memory of the portable equipment is not able to store all of the software, a part or all of the stored data file may be wirelessly transmitted to a remote processing device which then does the processing in order to detect information patterns and sends information about the detected information patterns or the detected information patterns itself back to the portable equipment. Hereby, the wireless communication system used for the transmission of the at least part of the stored data file may be the same wireless system in which the data file was originally received, or another wireless communication system in which the portable equipment is adapted to communicate. The display is advantageously adapted to display a received information pattern with a readable size together with the stored data file.

Advantageously, the storing portion has a size enabling the storing of a stored data file without information loss.

Alternatively, it may be advantageous if the storing portion has a size enabling the storing of a stored data file with an information loss which still enables the detection of information patterns in the stored data file.

Advantageously, the received data file is an image or a video file.

Advantageously, the information pattern comprised in the received data file is a text pattern.

### BRIEF DESCRIPTION OF THE DRAWINGS

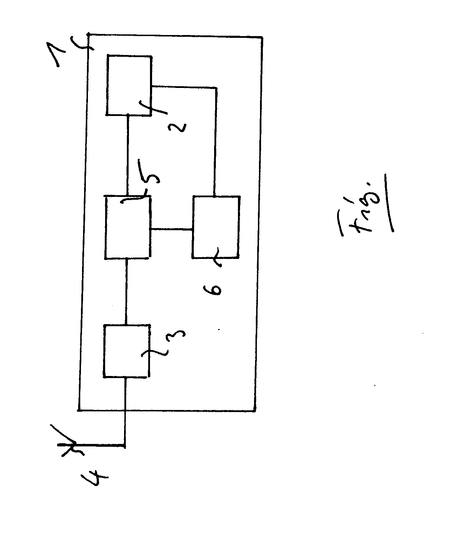

The present invention is further explained in more detail in the following description in relation to the enclosed drawing, which shows a schematic block diagram of a portable equipment according to the present invention.

### DETAILED DESCRIPTION OF EMBODIMENT

In a basic embodiment, the portable equipment 1 of the present invention is only adapted and equipped with all necessary elements and means to receive data in a wireless system and, after some processing, to display data on a display 2 comprised in the portable equipment 1. Hereby, the portable equipment 1 comprises a receiving portion 3 for receiving the data via an antenna 4 in the wireless system. Alternatively, the receiving portion and the antenna may be comprised in an accessory device or another external device connectable to the portable equipment. The wireless system, as stated further above, may be a wireless broadcast system, such as a television system, a cellular telecommunication system, a paging system or the like. The term "receiving portion" hereby indicates all necessary elements and means to receive and process the received signals into one or more data files. A received data file is forwarded from the receiving portion 3 to a storing portion 5 in which it is stored. The storing portion 5 may be a video or display buffer of the portable equipment 1 or any other suitable storing element.

The portable equipment 1 further comprises a processing section, which may e.g. be a central control unit, a microprocessor or the like, which controls at least a part or all of the functionalities of the portable equipment 1. The storing portion 5 has a size which enables the processing portion 6 to process a received and stored data file in the storage portion 5 to detect information patterns in the stored data file. The processing portion 6 hereby may comprise software functionalities for the recognition and detection of information patterns of a preset type or kind in the stored data file. Hereby, the detection of information pattern by the processing portion 6 comprises all known or future types of pattern recognition, such as the recognition of normal text, such as text in a text file as well as Internet addresses, e-mail addresses, telephone numbers as well as any other type of information comprising characters, numbers, symbols or any combination thereof which needs to be read or recognised by a user from the display of the portable equipment 1.

After the detection of one or more information patterns in the stored data file, the processing portion 6 causes the display 2 to display the data file stored in the storing portion 5 as well as the detected information pattern(s) within the data file. Hereby, the detected information pattern(s) are displayed with a size which enables a user to read and recognise the information contained therein. Hereby, in case that the displayed size of the detected information pattern(s) would be too small to be read and recognised by a user, the size of the detected information pattern(s) is increased in relation to the remaining data file on the display of the display portion 2. It is to be noted that between the storing portion 5 and the display 2, the processed data file may be intermediately stored in a video or display memory before the actual display on the display 2. In order to provide a more exhaustive processing and detection of information patterns in a received and stored data file, the portable equipment 1 may in a more elaborate embodiment further comprise elements and functionalities in order to wirelessly transmit a part or all of the received and stored data file through a wireless communication system to one or more remote processing devices such as a server or the like, which has more processing power and is able to detect and recognise a much greater range of information patterns in the data file. In order to be able to fulfil this kind of functionality, the receiving portion 3 may be part of a communication portion, which is able to receive and transmit signals and data in a wireless communication system. Hereby, the communication portion can be part of the portable equipment or of a separate accessory device or the like connectable to the portable equipment. The wireless communication system may be the same wireless system in which the original data file was received or may be a different kind of wireless system. E.g., the wireless system in which the original data file is received may be a television broadcast system, whereas the wireless communication system in which a part or all of the received data file is transmitted to a remote processing device may be a wireless cellular telecommunication system or the like. After receiving one or more detected information patterns through the wireless communication system from the remote processing device, the processing portion 6 causes the display 2 to display the stored data file together with the received information pattern, whereby the received information pattern is displayed in a readable size. This also includes the enlargement of the size of the information pattern as compared to the data file as described above. It has to be noted that the detection of information patterns in the received data file by the processing portion 6 and the transmission of a part or all of the received data file to the remote processing device for the detection of further information pattern(s) may be performed simultaneously in order to guarantee that all wanted types and kinds of information patterns are recognised and detected.

It has to be noted that the size of the storing portion 5 has to be chosen large enough to enable the storing of received data files without any information loss. The size of the storing portion 5 hereby depends on the size and the resolution of the display 2 of the portable equipment 1. The larger the display 2 and the better the resolution of the display 2 are, the larger the storing portion 5 has to be. Alternatively, the storing portion 5 may be chosen to have size which enables the storing of a received data file with a certain information loss, which still enables the detection of information patterns in the stored data file.

The portable equipment according to the present invention enables the reception, the storage and the display of data files and the detection of specific information patterns in the received data files and the display of detected information patterns with a readable size on the display of the portable equipment 1 in a simple but efficient manner.

## Claims

1. Portable equipment (1) for receiving data, comprising
a storing portion (5) for storing a received data file,
said storing portion (5) having a size which enables a processing portion (6) to process the stored data file to detect information patterns in the stored data file, and
a display (2) for displaying data,
whereby said display (2) is adapted to display a detected information pattern with a readable size together with said stored data file.

2. Portable equipment (1) according to claim 1,
whereby said processing portion (6) is adapted to cause the display to display a detected information pattern with an enlarged size as compared to the remaining data file.

3. Portable equipment (1) according to claim 1 or 2,
further comprising a communication portion (3) for transmitting at least a part of said stored data file in a wireless communication system to a remote processing device and for receiving a detected information pattern from said processing device.

4. Portable equipment (1) according to claim 3,
whereby said display (2) is adapted to display a received detected information pattern with a readable size together with said stored data file.

5. Portable equipment (1) according to one of the claims 1 to 4,
whereby the storing portion (5) has a size enabling the storing of a received data file without information loss.

6. Portable equipment (1) according to one of the claims 1 to 4,
whereby the storing portion (5) has a size enabling the storing of a received data file with an information loss which still enables the detection of information patterns in the stored data file.

7. Portable equipment (1) according to one of the claims 1 to 4,
whereby said received data file is an image or video file.

8. Portable equipment (1) according to one of the claims 1 to 4,
whereby said information pattern comprised in said received data file is a text pattern.
